# EUROPEAN PATENT SPECIFICATION

(11) **EP 0 381 938 B1**
(45) Date of publication and mention of the grant of the patent: **13.10.1993**
(21) Application number: 90100576.9
(22) Date of filing: 12.01.1990
(51) Int. Cl.: B29C 47/90, B29D 23/22, F16L 9/127

(54) **Cooling plugs in thermoplastic pipe forming apparatus**
Kühldorne für Vorrichtungen zur Herstellung thermoplastischer Rohre
Mandrin de refroidissement dans un appareil à former des tuyaux thermoplastiques

(30) Priority: 16.01.1989 CA 588338
(43) Date of publication of application: 16.08.1990
(73) Proprietor: Lupke, Manfred Arno Alfred, Thornhill Ontario L3T 1W6 (CA)
(72) Inventor: Lupke, Manfred Arno Alfred, Thornhill Ontario L3T 1W6 (CA)
(74) Representative: Patentanwälte Lippert, Stachow, Schmidt & Partner

## Description

The invention relates to apparatus for forming seamless ribbed thermoplastic tubes, comprising a travelling mold tunnel, means for extruding molten thermoplastic into the travelling mold tunnel, a sizing plug with a surface for forming an inner wall of the tube, and means for introducing a parison of molten thermoplastic onto the surface of said plug.

An apparatus of this kind with a simple sizing plug defining the inner wall of a tube is disclosed in the EP 0 239 046.

The US-patent 4,663,107 discloses a different kind of apparatus comprising a mandrel for cooling the interior surface of a tube having a smooth outer wall. On the surface of the mandrel disclosed in the US 4,663,107 four circumferential grooves are formed and zigzag grooves are formed between the central grooves. Holes are formed in the bottom of each of the circumferential grooves respectively and are connected to a vacuum pump to thereby maintain the inside of the mandrel at a negative pressure. The holes and grooves are arranged such that the vacuum supplied will be of equal strength along the length of the mandrel, thus bringing the interior surface of the tube into tight contact with the exterior surface of the mandrel. Additionally, cooling water is supplied to the exterior surface of the mandrel.

The US 4,377,545 discloses a method of making rigid, stiff, reinforced thermoplastic pipe having interior and exterior tubes with corrugations therebetween, comprising extruding through a pipe forming die, the interior and exterior tubes of a pipe at one linear rate while extruding a third skin or ribbon at a faster linear rate whereby the third skin buckles between the interior and exterior tubes to create corrugations in the space between the two tubes. In order to size the inside diameter of the inner tube, vacuum is provided through short passages extending from a manifold in a mandrel and will thus be aproximately equal at all points along the surface of the mandrel thereby bringing the interior surface of the inner tube into tight contact with the surface of the mandrel.

Murai et al (4,036,930) discloses a method of manufacturing resin tubes alternately having a thick wall portion a thin wall portion. Resin tubes having thick wall portions and thin wall portions are formed by providing a specially configured orifice on an extruder and varying the rate at which the extruded resin tube is pulled from the extruder. In order to provide a constant outside diameter of the tube a cylindrical outside diameter control device with annular grooves formed in an internal surface thereof and in communication with a pressure reducing pipe through which air is discharged is provided. This results in a partial vacuum causing the resin tube to come into close contact with the internal surface of the device. Then the resin tube emerges from the device into a water vessel, in which cooling water is stored, so that the external surface thereof is cooled by the cooling water.

However, the production of ribbed tubing arises substantially different problems. Furthermore usually some temperature control is desireable in a sizing plug.

A cooling plug suitable for use in the formulation of ribbed pipe ist disclosed by Lupke in his later US-patent No. 4,555,230 issued November 26, 1985. In that patent Lupke provides within and near the surface of a follower plug, a helical coil of tubing through which cooling fluid may be passed.

The sizing plug is provided to form a smooth inner wall to the formed tube but, when ribbed pipe is formed, some problems have occured in obtaining a smooth inner wall. The reason is due to the variation in the requirement of plastic material due to the varying wall thickness for the ribs and throughs. Thus, more plastic material will be required to form the ribs and a part of the tube wall (troughs) between ribs. Stresses are set up in the apparatus at the point of filling the mold blocks due to this varying demand for plastic material. Moreover, uneveness due to shrinkage is accentuated where thickness of the tube varies, as for example, where there are ribs and troughs.

Canadian patent No. 1,303,315 of the same inventor and filed September 16, 1988, describes and claims the use of an accumulator chamber for plastic material at the point of mold filling. The accumulator chamber is intended to even out pressure variations and to reduce stresses. The use of such an accumulator chamber is very useful in its intended purpose but there still may be some effects of pressure variations to be seen on the inside wall of the tube.

Thus, the inside wall of the tube may have a slight wave formation, tending to apparently bulge inwardly between the ribs where the pressure of extrudate is greater, and tending to actually recede to form an indetation opposite a rib where the pressure of extrudate is less. This effect is accentuated when an accumulator chamber is not used.

When double walled corrugated tubing is to be produced difficulties have been encountered due to the pressure within the corrugations. If this pressure is too low, the inner wall may be bow into the corrugation forming an undesirable concavity in the inner wall. If the pressure is to high, the inner wall may bow away from the corrugation forming an undesirable bulge in the inner wall.

The objective of the present invention is to improve the attainable smoothness of the inner wall of molded thermoplastic profiled tube especially where the outer surface is ribbed.

This is achieved in that means for cooling the surface of said plug and means to distribute suction over the surface of said plug are provided and the said suction distribution means are arranged such that suction is applied downstream at the point at which cooling is started so that there is a diminution in the vacuum pressure in the upstream direction of the plug.

Preferably, a groove or grooves are present on the sizing surface of the plug to distribute the suction over its surface.

The apparatus of the invention is applicable to tube molding apparatus of the travelling mold type especially when that apparatus is for forming ribbed or double walled corrugated tube. However, a reason for this is that imperfections in the inner wall of such tubing may tend to be more pronounced due to differences in requirements for extrudate along the mold.

The suction applied at the surface of the sizing plug may be used to draw cooling water or other liquid, from the interior of the plug through orifices provided to the tube sizing surface. Such water or other liquid may be useful for lubrication or other purposes at the interface between the inner wall of the formed tube and the plug.

Other advantages of the present invention will be appearant from the dependent claims.

Embodiments of the invention will now be described by way of example with reference to the accompanying drawings in which:
Fig. 1 is a sectional view of an extrusion nozzle of apparatus for molding thermoplastic pipe in a travelling mold tunnel, showing part of a mold tunnel in a cooling plug according to the invention;

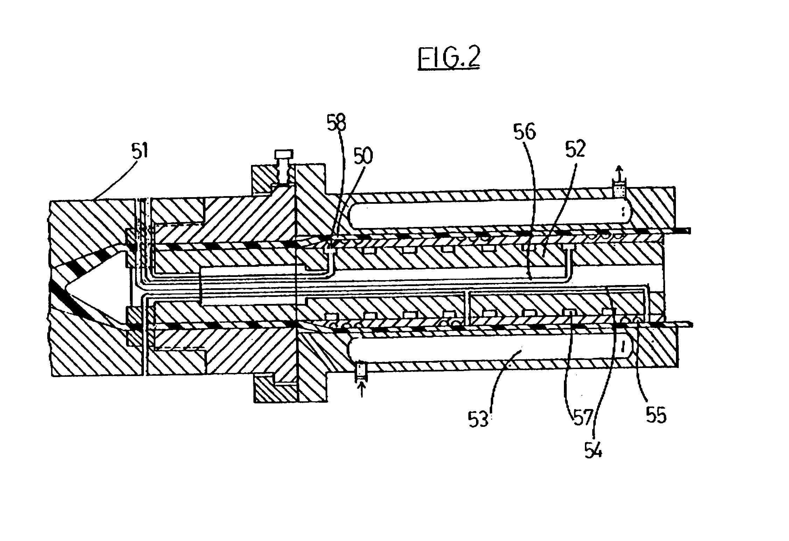

Fig. 2 is a sectional view of part of extrusion apparatus to forming single plain walled tube including a sizing plug;
Figure 3 is a view of a cooling plug such as that of Figure 1;

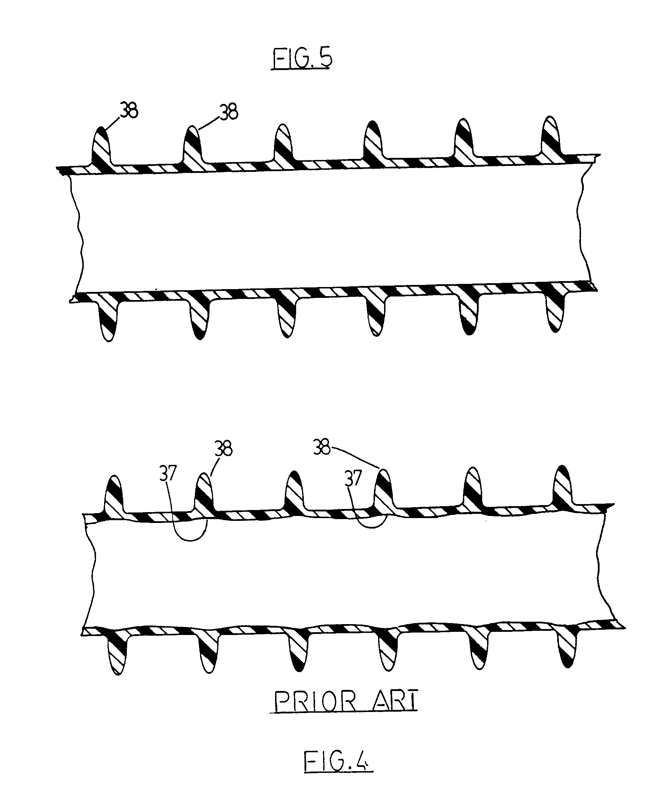

Figure 4 is a sketch of a longitudinal section of prior art tubing showing uneveness of the interior wall; and
Figure 5 is a sketch similar to that of Figure 4 showing the desired profile of the inner wall.

### DETAILED DESCRIPTION OF THE PREFERRED EMBODIMENTS

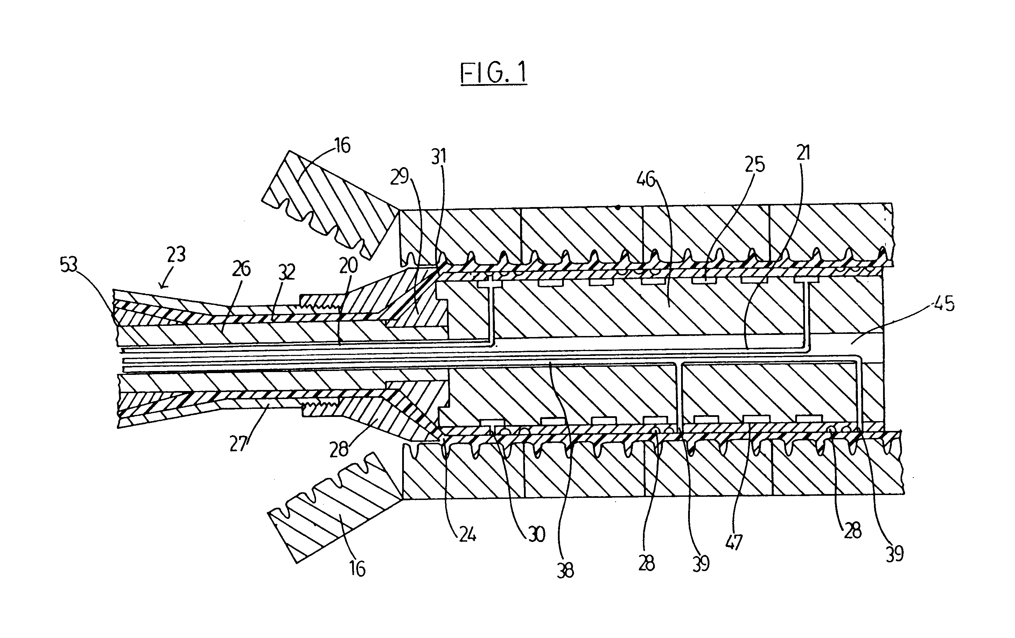

Referring to the drawings and more particularly to Figure 1 thereof, the apparatus comprises a pair of complementary upper and lower mold assemblies. Each mold assembly comprises articulately interconnected mold blocks 16.

The mold blocks 16 may be such as to mold pipe of any desired configuration. For example, mold blocks 16 may be such as to mold annularly ribbed pipe or helically ribbed pipe, double walled pipe, or other configurations. However, it is desired that the inner wall of the pipe be smooth.

The mold assemblies may be operatively positioned to locate an extrusion head 23 being operatively coupled to the nozzle of an extrusion machine, which may be of conventional form. If required, the mold assemblies may be moved away from the extrusion head 23 in order to provide access it for maintenance, or other reasons.

The extrusion head 23 comprises an axially extending tubular portion 26 which is surrounded in spaced relationship thereto by a tubular member 27, one end portion of which screw-threadedly supports an outer member 28 of an annular extrusion nozzle 24. The tubular portion 26 carries an inner member 29 of the extrusion nozzle having a frusto- conical form which terminates in annular orifice 31 and which communicates with the annular space 32 between the pipe 27 and the portion 26. This annular space 32, in turn, communicates with the output of the extrusion machine (not shown) passing the thermoplastic material, such as PVC to the extrusion nozzle 24.

Downstream of the extrusion nozzle 24 the extrusion head 23 carries, on an extension of tubular portion 26, a generally cylindrical sizing plug 46. The plug 46 is effective to define the inner wall of pipe formed by thermoplastic material leaving the extrusion nozzle 24 to be molded by mold blocks 16. In particular, plug 46 holds thermoplastic material in troughs of the mold blocks 16 to form annular ribs on the outer surface of the resulting pipe.

Cooling of plug 46 may be by isentropic expansion of compressed gas, for example, carbon dioxide.

Alternatively, cooling of plug 46 may be any conventional means, for example, flow of cooling water from conduit 20 through channels 25 arranged internally of and extending over, the length of the plug 46. Return flow of cooling water may be through conduit 21, either through core 53 of tubular member 26. The cooling arrangements for plug 46 form no part of the present invention and many variations in such cooling arrangements are possible for simplicity. Again this may be through any conveniently located return conduit.

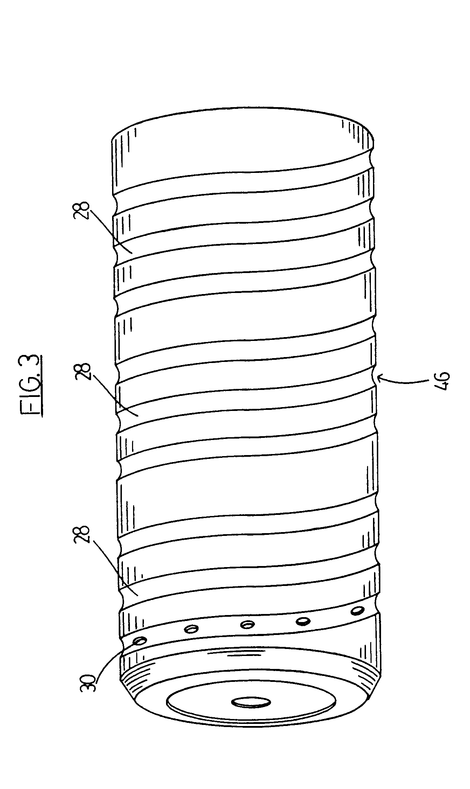

The cooling plug 46 conveniently comprises a core 45 connected at one end to inner member 29 having a channel 25 in its outer surface for cooling liquid, for example, water. Core 45 has an axial bore communicating with, and extending bore 53 of extrusion head 23. Channel 25 may be of helical form or any other convenient shape. Core 45 may be covered by sleeve 47 to confine cooling liquid to channel 25. Sleeve 47 has a generally smooth outer surface to size inner wall of tubing in the mold, but is provided with a channel or channels 28 to distribute suction over the outer surface of sleeve 47. One form of channel 28 is illustrated in figure 3 as a helical channel and has a small cross-section in comparison with the cross-section of cooling channel 25. In fact the width of channel 25 may be as small as 0.010 inches. Other shapes of channel are, of course, possible. Channel 28 communicates with a single source of suction (not shown) via a conduit 38 which opens into channel 28 and suction port 39. Conduit 38 may or may not branch so that suction may be applied in stages along plug 46. When it branches, in this case each branch will open into a plurality of channels similar to 28. Preferably, each channel 28 is located to apply suction downstream at the point at which cooling is started so that plastic material will not be drawn into channels 28. When suction is applied at the downstream end of the plug 46 without branching of conduit 38, the timinution in strength is progressive towards the upstream end.

It may be advantageous to provide small communicating channels 30 between cooling liquid channel 25, or other liquid reservoir in the cooling plug, and the external surface of the plug 46. Suction applied through channel 28 will thus tend to draw small amounts of liquid to the outside of the plug to have a possible lubricating and/or smoothing effect on the tubing wall. Lubrication may also be provided by a porous forward region of plug 46.

When annularly ribbed pipe is being formed as described and claimed in Canadian patent No. 1,303,315 filed September 16, 1988, it is convenient if conduit 38 opens to channel 28 immediately downstream of the accumulator chamber.

In conventional operation, there is a tendency for the inner wall to be formed as shown in the exaggerated sketch of Figure 3. When suction is applied to the inner wall to the tube, especially sufficiently for upstream that the plastics material is easily flowable, the tendency to form indentation 37 opposite each rib 38 of tube may be mitigated.

## Claims

1. An apparatus for forming seamless ribbed thermoplastic tubes, comprising a travelling mold tunnel, means for extruding molten thermoplastic into the travelling mold tunnel, a sizing plug (46) with a surface for forming an inner wall of the tube, and means for introducing a parison of molten thermoplastic onto the surface of said plug (46), characterized in that means for cooling the surface of said plug (46) and means to distribute suction over the surface of said plug (46) are provided and that said suction distribution means are arranged such that suction is applied downstream at the point at which cooling is started so that there is a diminution in the vacuum pressure in the upstream direction.

2. Apparatus according to claim 1, characterized in that at least one suction distribution channel (28) adapted to distribute suction is provided on the surface of the plug (46) longitudinally open.

3. Apparatus according to claim 1 or 2, characterized in that conduit means which branch to open into plurality of suction ports (39) spaced along the length of the plug (46) are provided.

4. Apparatus according to one of the preceding claims, characterized in that the plug (46) includes a liquid channel (25) or reservoir.

## Patentansprüche

1. Vorrichtung zur Formung nahtloser gerippter thermoplastischer Rohre, bestehend aus einem wandernden Formtunnel, einer Vorrichtung zum Extrudieren geschmolzenen Kunststoffes in den wandernden Formtunnel, einem Kalibrierungsdorn (46) mit einer Oberfläche zur Formung einer inneren Wandung des Rohres und eine Einrichtung zur Einleitung einer Lage geschmolzenen Kunststoffes auf die Oberfläche des Doms (46),
dadurch gekennzeichnet, daß eine Einrichtung zur Kühlung der Oberfläche des Doms (46) und eine Einrichtung zur Verteilung eines Sogs über die Oberfläche des Doms (46) vorgesehen sind und daß die Einrichtung zur Verteilung eines Sogs so angeordnet ist, daß der Sog stromabwärts am Beginn der Kühlung aufgebracht wird, so daß der Unterdruck stromaufwärts verringert wird.

2. Vorrichtung nach Anspruch 1, dadurch gekennzeichnet, daß zumindest ein für die Sogverteilung ausgelegter Sogverteilungskanal (28) auf der Oberfläche des Doms vorgesehen ist und der Länge nach offen ausgebildet ist.

3. Vorrichtung nach Anspruch 1 und 2, dadurch gekennzeichnet, daß Leitungen mit Verzweigungen, die in mehrere auf der Länge des Doms (46) angeordnete Sogöffnungen (39) münden, vorgesehen sind.

4. Vorrichtung nach einem der vorhergehenden Ansprüche, dadurch gekennzeichnet, daß der Dorn (46) einen Flüssigkeitskanal (24) oder ein Reservoir aufweist.

## Revendications

1. Dispositif pour former des pièces tubulaires thermoplastiques nervurées sans soudure, comprenant un tunnel de moulage mobile, des moyens pour extruder la matière thermoplastique fondue dans le tunnel de moulage mobile, un mandrin de calibrage (46) avec une surface formant une paroi interne de la pièce tubulaire, et des moyens pour introduire une ébauche de matière thermoplastique fondue sur la surface dudit mandrin (46), caractérisé en ce que des moyens pour refroidir la surface dudit mandrin (46) et des moyens pour distribuer une aspiration sur la surface dudit mandrin (46) sont prévus et en ce que lesdits moyens de distribution de l'aspiration sont disposés de telle manière que l'aspiration est appliquée en aval du point de départ du refroidissement, de sorte qu'il y ait une diminution de la dépression dans la direction de l'amont.

2. Dispositif selon la revendication 1, caractérisé en ce que l'on prévoit au moins un canal de distribution d'aspiration (28) adapté pour distribuer une aspiration sur la surface du mandrin (46) longitudinalement ouvert.

3. Dispositif selon la revendication 1 ou 2, caractérisé en ce que l'on prévoit des conduits reliés de manière à s'ouvrir dans une pluralité d'embouchures d'aspiration (39) espacées sur la longueur du mandrin (46).

4. Dispositif selon l'une quelconque des revendications précédentes, caractérisé en ce que le mandrin (46) comprend un canal à liquide (25) ou un réservoir.
